**Europäisches Patentamt**

**European Patent Office**

**Office européen des brevets**

(19)

(11) Veröffentlichungsnummer : **0 380 716 B1**

(12) # EUROPÄISCHE PATENTSCHRIFT

(45) Veröffentlichungstag der Patentschrift :
**15.04.92 Patentblatt 92/16**

(51) Int. Cl.$^5$ : **B60S 9/12**

(21) Anmeldenummer : **89101517.4**

(22) Anmeldetag : **28.01.89**

(54) **Hydraulisch betätigbare Stützvorrichtung für Sattelauflieger.**

(43) Veröffentlichungstag der Anmeldung :
**08.08.90 Patentblatt 90/32**

(45) Bekanntmachung des Hinweises auf die
Patenterteilung :
**15.04.92 Patentblatt 92/16**

(84) Benannte Vertragsstaaten :
**AT BE CH DE ES FR GB GR IT LI LU NL SE**

(56) Entgegenhaltungen :
**EP-A- 0 070 144**
**GB-A- 1 099 599**
**US-A- 2 222 467**

(73) Patentinhaber : **Hunger, Walter, Dr.-Ing.**
**Otto-Nagler-Strasse 13**
**W-8700 Würzburg (DE)**

(72) Erfinder : **Hunger, Walter, Dr.-Ing.**
**Otto-Nagler-Strasse 13**
**W-8700 Würzburg (DE)**

(74) Vertreter : **Nix, Frank Arnold, Dr.**
**Kröckelbergstrasse 15**
**W-6200 Wiesbaden (DE)**

Jouve, 18, rue Saint-Denis, 75001 PARIS

**Beschreibung**

Die vorliegende Erfindung bezieht sich auf eine hydraulisch betätigbare Stützvorrichtung für Sattelauflieger. Solche Stützvorrichtungen dienen zum Anheben des Sattelaufliegers, wenn dieser von seiner Zugmaschine abgekoppelt bzw. an diese angekoppelt werden soll.

Stützvorrichtungen dieser Art sind in verschiedenen Ausführungsformen bekannt. Soweit diese hydraulisch betätigt sind, handelt es sich gewöhnlich um einfache Hydraulikzylinderanordnungen, die von gesondert angebrachten Pumpaggregaten mit möglicherweise umstellbarem Übersetzungsverhältnis beaufschlagt werden, was komplizierte Gestaltungen und hohe Beanspruchungen mit sich bringt. Ein Beispiel nach dem Oberbegriff von Anspruch 1 der vorliegenden Erfindung ist in EP-A- 0070 144 dargestellt.

Aufgabe der vorliegenden Erfindung ist die Schaffung einer hydraulisch betätigbaren Stützvorrichtung für Sattelauflieger, die durch gesonderte Baugruppen zum Absenken und zum Lastheben mit geringeren Beanspruchungen betrieben werden können und dadurch letztlich auch einfacher herzustellen sind. Die Vorrichtung soll kompakt ausgebildet sein; insbesondere sollen der zum Ausfahren und der zum Lastheben dienende Zylinder in einem Stützfuß integriert sein, und das Pumpaggregat mit allen Pumpeinheiten soll unter Ermöglichung kürzester Verbindungswege an einer den Stützen befestigbar sein.

Die Lösung der gestellten Aufgabe ergibt sich aus dem Patentanspruch 1. Zweckmäßige Weiterbildungen der Erfindung sind in den Unteransprüchen angegeben.

Die Erfindung wird nachfolgend durch die Beschreibung eines Ausführungsbeispiels anhand der beigegebenen Zeichnung weiter erläutert. Diese zeigt schematisch eine Stützvorrichtung für Sattelauflieger mit zwei im Längsschnitt dargestellten Sattelaufliegerstützen und einem an einer derselben befestigten Pumpaggregat.

Jede Sattelaufliegerstütze 1 besteht im wesentlichen aus einem Ausfahrzylinder 2, dessen oberes Ende am (nicht dargestellten) Sattelauflieger befestigt ist und in dem ein Ausfahrkolben 3 verschieblich sitzt. Am unteren Ende ist der Ausfahrkolben 3 zu einem Lasthebezylinder 4 erweitert, in dem ein Lasthebekolben 5 verschieblich sitzt. Dessen unteres Ende stützt sich auf einen Fußteller 6, wobei dieser mittels einer sphärischen Pfannenlagerung in begrenztem Maße allseitig kippbeweglich mit dem Lasthebekolben 5 verbunden ist.

Der Ausfahrkolben 3 ist auf seiner gesamten Länge unter Ausbildung einer zentralen Bohrung hohlgebohrt, in die von oben ein mit dem Ausfahrzylinder 2 starr verbundenes Druckrohr 7 abgedichtet ragt. Die nicht mit Bezugszeichen versehene äußere Dichtung des Ausfahrkolbens 3 gegenüber dem Ausfahrzylinder 2 und die innere Dichtung des Ausfahrkolbens 3 gegenüber dem Druckrohr 7 sind am oberen Ende des Ausfahrkolbens 3 befestigt. Auch das untere Ende des Ausfahrzylinders 2 ist gegenüber dem Ausfahrkolben 3 abgedichtet, so daß um diesen herum ein geschlossener Ausfahrkolben-Ringraum 8 gebildet ist.

In der Wand des Ausfahrzylinders 2 verläuft ein erster Einfahrdruckkanal 13 von einer Anschlußstelle am oberen Ende des Ausfahrzylinders 2 bis zu einer am unteren Ende des Ausfahrkolben-Ringraums 8 in diesen öffnende Mündung. In der Wand des Ausfahrkolbens 3 einschließlich des an seinem unteren Ende ausgebildeten Lasthebezylinders 4 verläuft ein zweiter Einfahrdruckkanal 14 von einer am oberen Ende des Ausfahrkolben-Ringraums 8 von diesem ausgehenden Mündung bis zu einer am unteren Ende des den Lasthebekolben 5 umgebenden Ringraums 10 in diesen öffnenden Mündung.

Am oberen Ende des Ausfahrzylinders ist eine Ausfahrleitung 20 angeschlossen, die in den Zylinderraum 11 des Ausfahrzylinders 2 mündet, sowie eine Lasthebeleitung 21, die an das Druckrohr 7 angeschlossen ist, welches seinerseits in den Zylinderraum 9 des Lasthebezylinders 4 mündet, und schließlich eine Einfahrleitung 22, die mit dem oberen Anschluß des ersten Einfahrdruckkanals 13 Verbindung hat.

Zur Abschirmung der beschriebenen Bauteile sowie auch zur zusätzlichen Führung bei den Aus- und Einfahrbewegungen dienen ein mit dem Lasthebekolben 5 starr verbundenes Führungsrohr 25 und ein dieses umgebender und mit ihm führend zusammenwirkender Führungsmantel 26, der mit dem Ausfahrzylinder 2 starr verbunden ist.

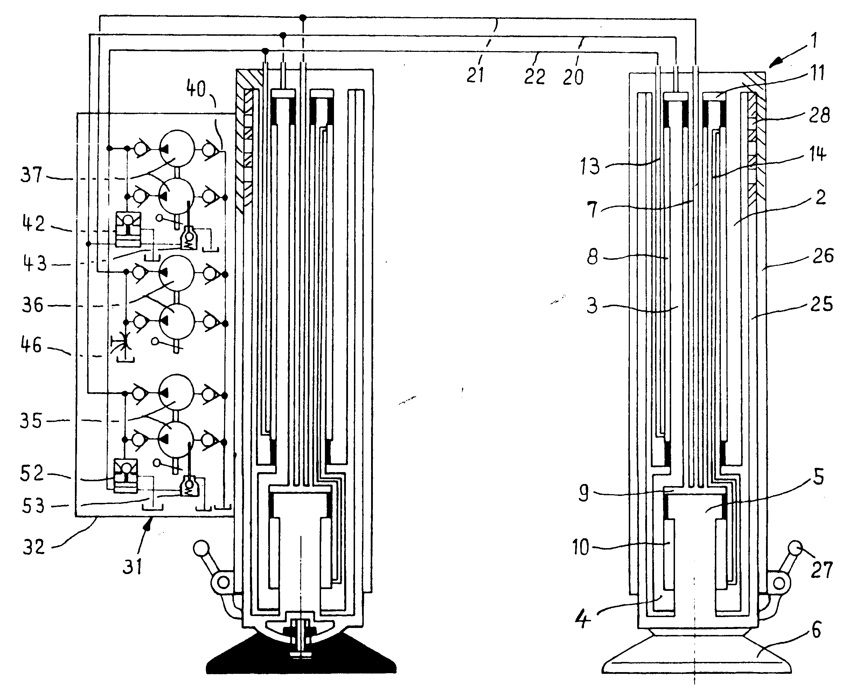

Zur Arretierung der ausgefahrenen Stellung der Sattelaufliegerstütze ist am unteren Ende des Führungsmantels 26 eine Arretierklinke 27 gelagert, die sich unter der Wirkung des Eigengewichts ihres Handgriffs (bei Betrachtung der Zeichnung im Uhrzeigersinn) zu Drehen sucht und deren unteres Ende im ausgefahrenen Zustand der Sattelaufliegerstütze in eines von mehreren Arretierfenstern 28 einfällt, welche in der Nähe des oberen Endes des Führungsrohrs 25 ausgespart sind.

An einer der beiden Sattelaufliegerstützen 1 ist das in einem Gehäuse 32 untergebrachte Pumpaggregat 31 befestigt. Dieses enthält, jeweils aus zwei handbetätigbaren Pumpeinheiten bestehend, eine Ausfahrpumpe 35, eine Lasthebepumpe 36 und eine Einfahrpumpe 37. Diese saugen aus einem gemeinsamen Flüssigkeitsvorrat an, wie dies schematisch durch eine Saugleitung 40 dargestellt ist, die zu dem schematisch als Wanne dargestellten Vorrat führt. Vor und hinter jeder Pumpeinheit ist ein nicht mit Bezugszeichen versehenes Rückschlagventil angeordnet, um eine ordnungsgemäße Doppelwirkung dieser Pumpen sicherzustellen. Die Einfahrpumpe 37 fördert in die Einfahrleitung 22, die Lasthebepumpe 36 in die Lasthebeleitung 21 und die Ausfahrpumpe 35 in die Ausfahrleitung 20.

In der praktischen Ausführung haben die Pumpen an ihren nach außen vorragenden Wellen kurze Einsteckschellen oder Betätigungsstummel, in die eine Hebelstange mit Handgriff einsteckbar ist. Dieser Hebel kann dann von Pumpe zu Pumpe umgesteckt werden und außerdem noch für andere Betätigungen dienen.

An die Einfahrleitung 22 ist ein steuerbares Rückflußventil 42 angescchlossen, dessen an die Ausfahrleitung 20 angeschlossener Steuereingang bei Druckbeaufschlagung derselben das Ventil öffnet und den Rückfluß aus der Einfahrleitung 22 in den Flüssigkeitsvorrat freigibt. Dies ist dadurch angedeutet, daß der Steuerdruck einen kleinen Kolben nach oben beaufschlagt, welcher mit einem aufragenden Stift eine Ventilkugel von ihrem Sitz abhebt.

Ebenfalls an die Ausfahrleitung 20 angeschlossen (in der Zeichnung durch den Zylinderraum des steuerbaren Rückflußventils 42 hindurch) ist ein stößelgesteuertes Druckentlastungsventil 43, welches durch einen mechanisch mit der Pumpenwelle der Einfahrpumpe 37 zusammenwirkenden Stößel bei Beginn des Pumpens kurzzeitig in die Offenstellung gedrückt wird und dabei einen in der Ausfahrleitung 20 vorhandenen Druck entweichen läßt.

An die Lasthebeleitung 21 ist ein Lastabsenkventil 46 angeschlossen, bei dessen Öffnen die Lasthebeleitung gedrosselt mit einem Rückfluß in den Flüssigkeitsvorrat verbunden wird.

An die Ausfahrleitung 20 ist ein steuerbares Rückflußventil 52 angeschlossen, dessen an die Einfahrleitung 22 angeschlossener Steuereingang bei Druckbeaufschlagung derselben das Ventil öffnet und denn Rückfluß aus der Ausfahrleitung 20 in den Flüssigkeitsvorrat freigibt. Schließlich ist an die Einfahrleitung 22 (durch dass Rückflußventil 52 hindurch) ein stößelgesteuertes Druckentlastungsventil 53 angeschlossen, welches bei Beginn des Pumpens mit der Ausfahrpumpe 35 kurzzeitig mechanisch offengesteuert wird.

Die Verhältnisse der Fördermengen der Pumpen 35 und 36 pro Pumphebelschwenkung zu den von ihnen beaufschlagten Stirnflächen der Kolben 3 und 5 sind so gewählt, daß das Ausfahren des Ausfahrkolbens 3 mittels Betätigung der Ausfahrpumpe 35 eine wesentlich größere Übersetzung hat als das Lastheben durch Ausfahren des Lasthebekolbens 5 mittels Betätigung der Lasthebepumpe 36. Es hat also die den Ausfahrkolben beaufschlagende Ausfahrpumpe ein wesentlich größeres Fördervolumen pro Betätigungsbewegung als die den Lasthebekolben beaufschlagende Lasthebepumpe und/oder die druckbeaufschlagte wirksame Stirnfläche des Lasthebekolbens 5 ist wesentlichh größer als die wirksame (ringförmige) Stirnfläche des Ausfahrkolbens 3.

Der Betrieb der beschriebenen Stützvorrichtung für Sattelauflieger verläuft wie folgt:

Wenn ein Sattelauflieger vor dem Abkuppeln von seinem Zugfahrzeug abgestützt werden soll, wird zunächst ausgehend von der in der Zeichnung gezeigten eingefahrenen Lage der Ausfahrkolben 3 dadurch abgesenkt, daß man den Pumphebel auf die Welle der Ausfahrpumpe 35 steckt und pumpt. Dadurch gelangt Flüssigkeit unter Druck in die Ausfahrleitung 20 und beaufschlagt den Ausfahrkolben 3, der zusammen mit dem relativ zu ihm unbeweglich bleibenden Lasthebekolben 5 ausfährt, bis der Fußteller 6 auf den Erdboden abgesenkt ist.

Bei diesem Ausfahren des Ausfahrkolbens 3 wird die im Ausfahrkolben-Ringraum 8 befindliche Flüssigkeit durch den ersten Einfahrdruckkanal 13 in die Einfahrleitung 22 verdrängt. Da der in der Ausfahrleitung 20 erzeugt Druck das steuerbaree Rückflußventil 42 aufgesteuert hat, kann die Flüssigkeit durch dieses aus der Einfahrleitung 22 in die Flüssigkeitsvorrtswanne abfließen.

Für den Fall, daß der bei Beginn des betrachteten Ausfahrvorgangs in der Einfahrleitung 22 herrschende Druck so groß ist, daß die vom Ausfahrdruck auf den Kolben des steuerbaren Rückflußventils 42 ausgeübte Kraft nicht ausreicht, dieses zu öffnen, wird das stößelgesteuerte Druckentlastungsventil 53 wirksam: Bei den ersten Pumpbewegungen der Ausfahrpumpe 35 wird das Druckentlastungsventil 53 kurzzeitig geöffnet, wodurch der Überschußdruck in der Einfahrleitung 22 abgebaut wird und sichergestellt wird, daß das Rückflußventil 42 vom Ausfahrdruck aufgesteuert werden kann.

Wenn der Fußteller 6 den Erdboden erreicht hat, steigt die zum weiteren Ausfahren erforderliche Kraft schroff an, weil ab jetzt der Sattelauflieger anzuheben ist. Dies ist mit der Ausfahrpumpe 35 nicht mehr zu bewirken, weil deren Übersetzungsverhältnis ein hohes ist und ein schnelles Ausfahren mit wenigen Pumpenschlägen ermöglichen soll. Der Pumphebel wird jetzt von der Ausfahrpumpe 35 abgezogen, auf die Lasthebepumpe 36 aufgesteckt und es wird mit dieser weiter gepumpt.

Der in der Lasthebeleitung 21 erzeugte Druck beaufschlagt den Lasthebekolben 5, der aus dem Lasthebezylinder 4 ausfährt und den Sattelauflieger zu heben beginnt. Die aus dem Lasthebekolben-Ringraum 10 dabei verdrängte Flüssigkeit gelangt durch den zweiten Einfahrdruckkanal 14, den Ausfahrkolben-Ringraum 8 und den ersten Einfahrdruckkanal 13 in die Einfahrleitung 22 und kann über das steuerbare Rückflußventil 42 abfließen, welches weiter in der Offenstellung bleibt, da der Druck in der Ausfahrleitung 20 mit dem Beginn des Lasthebens noch erheblich angestiegen ist.

Das Lastheben durch Betätigung der Lasthebepumpe 36 wird fortgesetzt, bis der Königszapfen des Sat-

3

telaufliegers von der Kupplungsplatte der Zugmaschine freikommt. In dieser Ausfahrstellung erreicht die Arretierklinke 27 die Arretierfenster 28 und fällt in eines derselben ein, was den Ausfahrzustand mechanisch sichert.

Wenn der Sattelauflieger wieder an eine Zugmaschine angekoppelt werden soll, wird das Lastabsenkventil 46 langsam geöffnet, so daß die unter Druck im Zylinderraum 9 des Lasthebezylinders 4 stehende Flüssigkeit in die Lasthebeleitung 21 zurück und durch das Lastabsenkventil 46 in die Flüssigkeitsvorratswanne abfließen kann. Dabei wird die Arretierklinke 27 angehoben, sodaß der Lasthebekolben 5 einfahren kann, bis der Sattelauflieger sich auf die Kupplungsplatte des Zugfahrzeugs abgesenkt hat und sein Gewicht von diesem getragen wird. Bei dieser Bewegung des Lasthebekolbens 5 wird Flüssigkeit in den sich vergrößernden Lasthebekolben-Ringraum 10 nachgesaugt, und zwar durch die Saugleitung 40, die Einfahrpumpe 37 mit ihren beidseitigen Rückschlagventilen, die Einfahrleitung 22, den ersten Einfahrdruckkanal 13, den Ausfahrkolben-Ringraum 8 und den zweiten Einfahrdruckkanal 14.

Wenn das Gewicht des Sattelaufliegers von den Stützen auf das Zugfahrzeug übergegangen ist, kommt das Einfahren des Lasthebekolbens 5 zum Stillstand und der Druck in der Ausfahrleitung 20 sinkt wesentlich ab. Zum weiteren Einfahren wird der Pumphebel auf die Einfahrpumpne 37 aufgesteckt und mit dieser gepumpt. Der in der Einfahrleitung 22 erzeugte Druck beaufschlagt über den ersten Einfahrdruckkanal 13 den Ausfahrkolben-Ringraum 8 und damit den Ausfahrkolben 3 im Sinne des Einfahrens und weiter über den zweiten Einfahrdruckkanal 14 den Lasthebekolben-Ringraum 10 und damit den Lasthebekolben 5 ebenfalls im Sinne des Einfahrens. Die von diesem aus dem Zylinderraum 9 weiter verdrängte Flüssiggkeit fließt weiter durch das Lastabsenkventil 46 in die Vorratswanne zurück.

Die beim Einfahren des Ausfahrkolbens 3 von diesem aus dem Zylinderraum 11 verdrängte Flüssigkeit fließt durch die Ausfahrleitung 20 zurück zum steuerbaren Rückflußventil 52, welches unter der Wirkung des Drucks in der Einfahrleitung 22 geöffnet hat. Sollte der bei Beginn der Betätigung der Einfahrpumpe 37 in der Ausfahrleitung 20 noch stehende Druck so groß sein, daß seine Kraft auf die Kugel des steuerbbaren Rückflußventils 52 dessen Öffnen verhindert, so wird das stößelgesteuerte Druckentlastungsventil 43 wirksam, welches bei den ersten Pumpenschlägen der Einfahrpumpe 37 eine Verbindung zwischen der Ausfahrleitung 20 und dem Rückfluß herstellt und den herrschenden Druck entweichen läßt.

Die weitere Betätigung der Einfahrpumpe 37 bewirkt in der beschriebenen Weise das vollständige Einfahren des Lasthebekolbens 5 und des Ausfahrkolbens 3, worauf das Lastabsenkventil 46 geschlossen werden und eine eventuelle mechanische Sicherung der Einfahrlage in Tätigkeit gesetzt werden kann.

Durch die beschriebene Ausbildung einer Sattelaufliegerstütze ist erreicht, daß jeder der Vorgänge Ausfahren, Lastheben und Einfahren durch sowohl pumpseitig als auch zylinderseitig gesonderte Einheiten bewirkt wird, was die Wahl der jeweils günstigsten Übersetzungsverhältnisse und optimale Anpassungen an die jeweils auftretenden Beanspruchungen erlaubt und somit letztlich eine einfach Konstruktion, zuverlässigen Betrieb und hoher Lebensdauer erwarten läßt.

## Patentansprüche

1. Hydraulisch betätigbare Stützvorrichtung für Sattelauflieger mit einem Pumpaggregat (31) zur Erzeugung und Steuerung des hydraulischen Betätigungsdrucks und wenigstens einer Hydraulikzylinder-Sattelaufliegerstütze (1), dadurch gekennzeichnet, daß

a) die Hydraulikzylinder-Sattelaufliegerstütze (1) einen Ausfahrkolben (3) aufweist, in dessen unterem Ende ein Lasthebezylinder (4) für einen Lasthebekolben (5) ausgebildet ist, wobei sowohl zwischen dem Lasthebekolben (5) und dem diesen umgebenden Zylinder (4) als auch zwischen dem Ausfahrkolben (3) und dem diesen umgebenden Zylinder (2) Ringräume (10, 8) zur Druckbeaufschlagung im Sinne des Einfahrens gebildet sind,

b) und daß das Pumpaggregat (31) aus drei unabhängig betätigbaren Pumpen (35, 36, 37) besteht, nämlich eine den Ausfahrkolben (3) beaufschlagende Ausfahrpumpe (35), eine den Lasthebekolben (5) beaufschlagende Lasthebepumpe (36) und eine die Ringräume (8, 10) beaufschlagende Einfahrpumpe (37), wobei das Übersetzungsverhältnis zwischen Lasthebepumpe (36) und Lasthebekolben (5) wesentlich niedriger ist als zwischen Ausfahrpumpe (35) und Ausfahrkolben (3).

2. Stützvorrichtung nach Anspruch 1, dadurch gekennzeichnet, daß die Ausfahrpumpe (35) ein wesentlich größeres Fördervolumen pro Betätigungsbewegung aufweist als die Lasthebepumpe (36).

3. Stützvorrichtung nach Ansprüchen 1 oder 2, dadurch gekennzeichnet, daß die zum Ausfahren druckbeaufschlagte Stirnfläche des Lasthebekolbens (5) größer ist als die zum Ausfahren druckbeaufschlagte Stirn-Ringfläche des Ausfahrkolbens (3).

4. Stützvorrichtung nach einem oder mehreren der vorhergehenden Ansprüche, dadurch gekennzeichnet, daß in der Wand des Ausfahrzylinders (2) in Axialrichtung ein erster Einfahrdruckkanal (13) verläuft, der in den Ausfahrkolben-Ringraum (8) mündet, und daß in der Wand des Ausfahrkolbens (3) sowie des mit ihm einstückig verbundenen Lasthebezylinders (4) in Axialrichtung ein zweiter Einfahrdruckkanal (14) verläuft, der in den Lasthebekolben-Ringraum (10) mündet.

5. Stützvorrichtung nach einem oder mehreren der vorhergehenden Ansprüche, dadurch gekennzeichnet, daß der Ausfahrkolben (3) hohlgebohrt ist und ein an die Lasthebeleitung (21) angeschlossenes Druckrohr (7) abgedichtet in den Bohrungskanal ragt.

6. Stützvorrichtung nach einem oder mehreren der vorhergehenden Ansprüche, gekennzeichnet durch eine die Ausfahrlage der Sattelaufliegerstütze (1) sichernde mechanische Verriegelung.

7. Stützvorrichtung nach einem oder mehreren der vorhergehenden Ansprüche, dadurch gekennzeichnet, daß die Zylinderanordnungen von einem Führungsrohr (25) umgeben sind, welches in einem äußeren Führungsmantel (26) gleitet.

8. Stützvorrichtung nach Ansprüchen 6 und 7, gekennzeichnet durch eine am Führungsmantel 26 angelenkte Arretierklinke (27), welche mit am oberen Ende des Führungsrohrs (25) ausgesparten Arretierfenstern (28) zusammenwirkt.

9. Stützvorrichtung nach Anspruch 8, dadurch gekennzeichnet, daß die Arretierklinke (27) unter der Wirkung ihres Eigengewichts in die Arretierfenster (28) einfällt.

10. Stützvorrichtung nach einem oder mehreren der vorhergehenden Ansprüche, dadurch gekennzeichnet, daß das Pumpaggregat (31) an einer der Sattelaufliegerstützen (1) befestigt ist.

11. Stützvorrichtung nach einem oder mehreren der vorhergehenden Ansprüche, dadurch gekennzeichnet, daß die Pumpen (35, 36, 37) Betätigungsstummel aufweisen, auf bzw. in die ein Pumphebel einsteckbar ist, und das dieser Pumphebel auch zur Betätigung des Lastabsenkventils (46) dient.


## Claims

1. Hydraulically operable supporting arrangement for semi-trailers, having a pump unit (31) for the generation and control of the hydraulic operating pressure and at least one hydraulic cylinder semi-trailer support (1), characterised in that

a) the hydraulic cylinder semi-trailer support (1) has an extension piston (3), in the lower end of which there is formed a load-lifting cylinder (4) for a load-lifting piston (5), with annular spaces (10, 8) being formed, for the application of pressure in the sense of retraction, not only between the load-lifting piston (5) and the cylinder (4) surrounding the latter, but also between the extension piston (3) and the cylinder (2) surrounding the latter,

b) and in that the pump unit (31) consists of three pumps (35, 36, 37) which can be operated independently, namely an extension pump (35) which acts upon the extension piston (3), a load-lifting pump (36) which acts upon the load-lifting piston (5) and a retraction pump (37) which acts upon the annular spaces (8, 10), with the transmission ratio between load-lifting pump (36) and load-lifting piston (5) being substantially lower than between extension pump (35) and extension piston (3).

2. Support arrangement according to claim 1, characterised in that the extension pump (35) has a substantially larger displaced volume per operating movement than the load-lifting pump (36).

3. Support arrangement according to claims 1 or 2, characterised in that the end face of the load-lifting piston (5), upon which pressure is applied for extension purposes, is greater than the end annular surface of the extension piston (3) upon which pressure is applied for extension purposes.

4. Support arrangement according to one or several of the preceding claims, characterised in that there extends in the wall of the extension cylinder (2), in the axial direction, a first retraction pressure channel (13) which leads into the extension piston annular space (8) and in that there extends in the wall of the extension piston (3) and also of the load-lifting cylinder (4), which is connected therewith in one piece, in the axial direction, a second retraction pressure channel (14) which leads into the load-lifting piston annular space (10).

5. Support arrangement according to one or several of the preceding claims, characterised in that the extension piston (3) is hollow-bored and a pressure tube (7), which is connected to the load-lifting line (21), projects into the bore hole channel in a sealed manner.

6. Support arrangement according to one or several of the preceding claims, characterised by a mechanical lock which secures the position of extension of the semi-trailer support (1).

7. Support arrangement according to one or several of the preceding claims, characterised in that the cylinder arrangements are surrounded by a guide tube (25) which slides in an outer guide casing (26).

8. Support arrangement according to claims 6 and 7, characterised by a stop catch (27) which is articulated on the guide casing 26 and which cooperates with stop apertures (28) which are recessed at the upper end of the guide tube (25).

9. Support arrangement according to claim 8, characterised in that the stop catch (27) falls into the stop apertures (28) under the effect of its own weight.

10. Support arrangement according to one or several of the preceding claims, characterised in that the pump unit (31) is secured to one of the semi-trailer supports (1).

11. Support arrangement according to one or several of the preceding claims, characterised in that the pumps (35, 36, 37) have operating stubs, onto or into which it is possible to plug a pump lever and that this pump lever is also used to operate the load-lowering valve (46).


**Revendications**

1. Dispositif d'appui à commande hydraulique pour semi-remorque comportant un groupe motoponpe (31) pour la production et la commande de la pression d'actionnement hydraulique et au moins une béquille de semi-remorque (1) à vérin hydraulique, caractérisé en ce que

a) la béquille de seni-remorque (1) à vérin hydraulique comporte un piston sortant (3) à l'extrémité inférieure duquel est aménagé un cylindre de levage (4) recevant un piston de levage (5), des chambres annulaires (10, 8) étant formées entre le piston de levage (5) et le cylindre (4) qui l'entoure d'une part et entre le piston sortant (3) et le cylindre (2) qui l'entoure d'autre part, pour l'application de la pression dans le sens de la rentrée du piston,

b) et en ce que le groupe motopompe (31) est composé de trois pompes (35, 36, 37) qui peuvent être actionnées séparément, à savoir une pompe de sortie (35) commandant le piston sortant (3), une pompe de levage (36) commandant le piston de levage (5) et une pompe de rentrée (37) commandant les chambres annulaires (8, 10), le rapport de transmission entre le pompe de levage (36) et le piston de levage (5) étant considérablement plus faible que le rapport de transmission entre la pompe de sortie (35) et le piston de sortie (3).

2. Dispositif d'appui selon la revendication 1, caractérisé en ce que la pompe de sortie (35) a un débit par mouvement d'actionnement nettement plus important que la pompe de levage (36).

3. Dispositif d'appui selon la revendication 1 ou 2, caractérisé en ce que la surface frontale du piston de levage (5) soumise à l'action de la pression pour la sortie du piston est supérieure à la surface annulaire frontale du piston sortant (3) soumise à l'action de la pression pour la sortie du piston.

4. Dispositif d'appui selon l'une ou plusieurs des revendications précédentes, caractérisé en ce qu'un premier conduit de pression de rentrée (13) qui débouche dans la chambre annulaire du piston sortant (8) s'étend dans la paroi du vérin de sortie (2), dans la direction axiale, et en ce qu'un deuxième conduit de pression de rentrée (14) qui déboucle dans la chambre annulaire du piston de levage (10) s'étend dans la paroi du piston sortant (3) et dans le vérin de levage (4) formant un ensemble monobloc avec lui, dans la direction axiale.

5. Dispositif d'appui selon l'une ou plusieurs des revendications précédentes, caractérisé en ce que le piston de sortie (3) est alésé et un tube de pression (7) relié à la conduite de levage (21) pénètre avec étanchéité dans le conduit formé par l'alésage.

6. Dispositif d'appui selon l'une ou plusieurs des revendications précédentes, caractérisé par un dispositif de verrouillage mécanique qui verrouille la béquille de semi-remorque (1) en position sortie.

7. Dispositif d'appui selon l'une ou plusieurs des revendications précédentes, caractérisé en ce que les ensembles de vérins sont entourés d'un tube de guidage (25) qui coulisse dans une enveloppe de guidage (26) extérieure.

8. Dispositif d'appui selon les revendications 6 et 7, caractérisé par un loquet de verrouillage (27) qui est articulé sur l'enveloppe de guidage (26) et qui coopère avec des ouvertures de verrouillage (28) aménagées à l'extrémité supérieure du tube de guidage (25).

9. Dispositif d'appui selon la revendication 8, caractérisé en ce que le loquet de verrouillage (27) tombe sous l'action de son propre poids dans les ouvertures de verrouillage (28).

10. Dispositif d'appui selon l'une ou plusieurs des revendications précédentes, caractérisé en ce que le groupe motopompe (31) est fixé sur l'une des béquilles (1) de la semi-remorque.

11. Dispositif d'appui selon l'une ou plusieurs des revendications précédentes, caractérisé en ce que les pompes (35, 36, 37) sont munies d'un dispositif d'actionnement sur lequel ou dans lequel un levier de pompe peut être engagé et en ce que ce levier de pompe sert également à la commande de la vanne d'abaissement (46).